# EUROPEAN PATENT APPLICATION

(11) **EP 2 607 632 A2**
(43) Date of publication of application: **26.06.2013**
(21) Application number: 12196488.6
(22) Date of filing: 11.12.2012
(51) Int. Cl.: F01D 25/28

(54) **Spring assembly**

(30) Priority: 20.12.2011 US 201113331343
(71) Applicant: Unison Industries LLC, Jacksonville, FL 32256 (US)
(72) Inventor: Myers, Jerry Wayne, Dayton, OH 45434 (US); Luschek, Bernard Albert, Dayton, OH 45434 (US); Mcqueen, Dennis Alan, Dayton, OH 45434 (US)
(74) Representative: Williams, Andrew Richard

(57) **Abstract**

A spring assembly (10) having a bushing (30), a bolt (36) having a head (38) and a shank (40) and where the shank (40) may be received within the bushing (30). The spring assembly (10) also includes a first spring bearing surface (44), a second spring bearing surface (46), and a spring (56) located between the first and second spring bearing surfaces (44, 46) and bearing against each of the first and second spring bearing surfaces (44, 46).

## Description

Jet engines used in contemporary aircraft produce substantial amounts of heat that must be transferred away from the engine in one way or another. Heat exchangers provide a way to transfer heat away from the engine. The heat exchangers are often arranged in a ring about a portion of the jet engine. The heat exchangers are subject to relatively high temperatures that cause them to expand thermally, especially laterally or tangential to the ring, yet need to remain fixed to the engine to prevent high cycle fatigue from engine vibration. Generally, such heat exchangers are line replaceable units and require servicing while the engine is mounted to the wing of the aircraft and within a thirty-minute window. Thus, the ability to easily mount the heat exchanger while still allowing for thermal growth and providing the desired stability is necessary.

In one embodiment, a spring assembly includes a bushing defining a through passage, a first threaded portion provided within the through passage, and further having a stop, a bolt having a head and a shank on which is provided a second threaded portion received within the through passage and is sized to be threaded into the first threaded portion, a first spring bearing surface operably coupled to at least one of the bushing and bolt, a second spring bearing surface slidably coupled to the bushing for sliding movement between the first spring bearing surface and the stop, and a spring located between and bearing against each of the first and second spring bearing surfaces. In a non-use condition, the second threaded portion threaded into the first threaded portion to retain the bushing, bolt, first and second bearing surfaces, and spring as an assembled unit, and in a use condition, the second threaded portion extends out the through passage where the second threaded portion may be threaded into a separate element.

In the drawings:
Figure 1 is a cross-sectional view illustrating a portion of a heat exchanger attached to a fan casing using a spring assembly according to an embodiment of the invention;
Figure 2 is an exploded perspective view illustrating the spring assembly of Figure 1;
Figure 3 is a cross-sectional view illustrating the spring assembly of Figure 1 in a non-use condition; and
Figure 4 is a cross-sectional view illustrating the spring assembly of Figure 1 in a use condition.

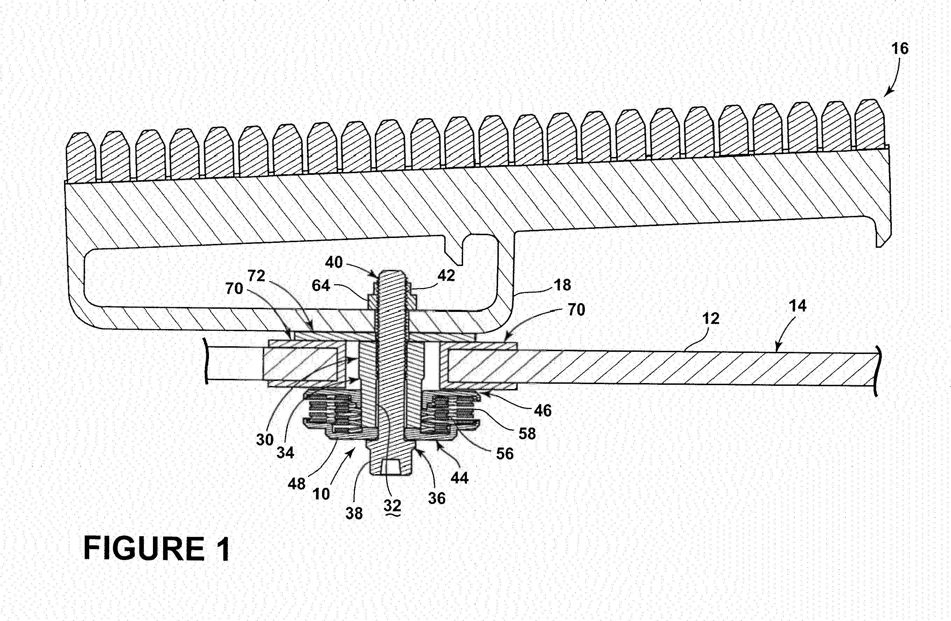

Referring to Figure 1, a brief explanation of the environment in which the spring assembly 10 may be used may provide useful. The spring assembly 10 is illustrated as being operably coupled between a portion of a fan case 12 and a heat exchanger 16. A bracket 18 may be operably coupled with the heat exchanger in any suitable manner. For example, the bracket 18 may be welded or otherwise permanently attached to the heat exchanger 16. Alternatively, the spring assembly 10 may directly couple the heat exchanger 16 to the fan case 12. The jet engine 14 may pose unique thermal management challenges and the heat exchanger 16 may be attached to the jet engine 14 to aid in the dissipation of heat to the environment surrounding the jet engine 14.

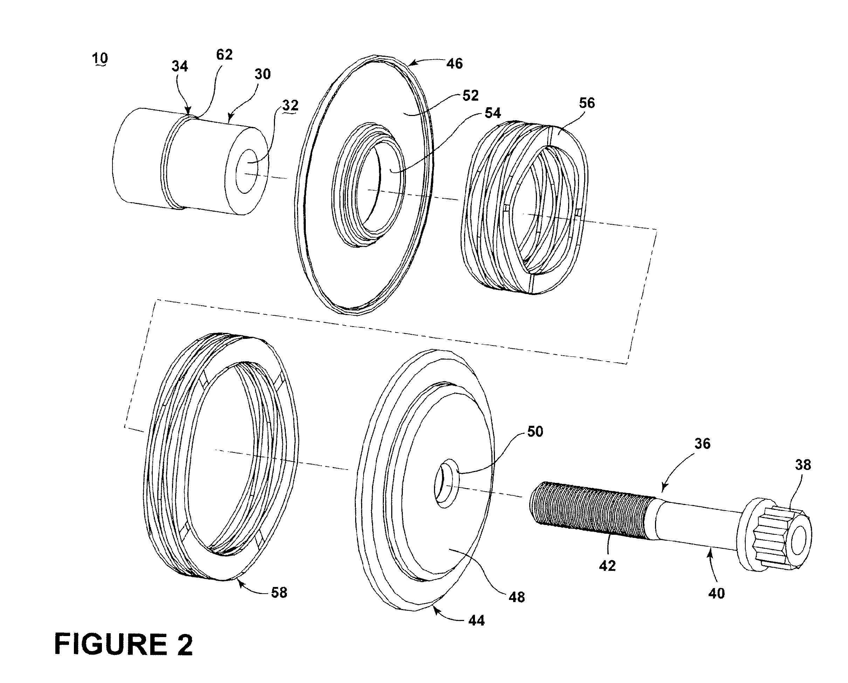

Figure 2 is an exploded view that more clearly illustrates the parts of the spring assembly 10 including a bushing 30 that defines a through passage 32 and has a stop 34, a bolt 36 having a head 38 and a shank 40 on which is provided a threaded portion 42, a first spring bearing surface 44, and a second spring bearing surface 46. The first spring bearing surface 44 may be operably coupled to at least one of the bushing 30 and the bolt 36. The first spring bearing surface 44 may include a first plate 48 located between the bolt head 38 and the bushing 30 and may include an opening 50 through which the bolt shank 40 may pass. The first spring bearing surface 44 has been illustrated as being separate from both the bushing 30 and the bolt 36. It will be understood that the first spring bearing surface 44 may alternatively be formed as a single piece with the bushing 30 or the bolt 36. For example, the first spring bearing surface 44 may be formed together with the head 38 of the bolt 36. The second spring bearing surface 46 may be formed in any suitable manner. For exemplary purposes, the second spring bearing surface 46 has been illustrated as including a second plate 52 having a second opening 54 through which the bushing 30 may pass. The bushing 30 and second spring bearing surface 46 may be formed from wear resistant materials.

A first spring 56 and a second spring 58 are also illustrated as being included in the spring assembly 10. The first spring 56 and second spring 58 may be any suitable springs including wave springs as illustrated. The force of the springs may vary depending on the particular application, with the illustrated springs having a spring force of approximately 200lbs of force. While both the first spring 56 and the second spring 58 have been illustrated, it is contemplated that a single spring may be used in the spring assembly 10. Both the first spring bearing surface 44 and the second spring bearing surface 46 may include lips or other features that may aid in keeping the first spring 56 and second spring 58 centered.

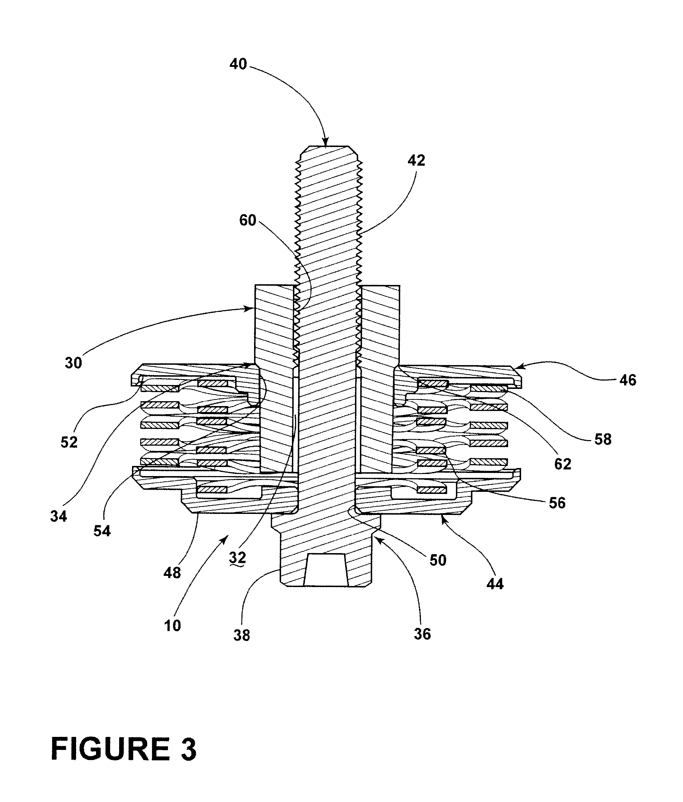

Figure 3 more clearly illustrates the assembled spring assembly 10 as well as details of the spring assembly 10 such as a threaded portion 60 provided within the through passage 32 of the bushing 30. Further, the stop 34 in the bushing 30 may more clearly be seen with respect to the rest of the spring assembly 10. The stop 34 has been illustrated as being on an exterior of the bushing 30 although the location of the stop 34 need not be so limited. The stop 34 has been illustrated as including an increased cross section of the bushing 30 such that the stop forms a shoulder 62 on the bushing 30.

When the spring assembly 10 is assembled, the second spring bearing surface 46 may be placed over the bushing 30 such that the stop 34 interferes with the sliding movement of the second spring bearing surface 46 relative to the bushing 30 to limit the sliding movement of the second spring bearing surface 46. The first spring 56 and the second spring 58 may be located between and bear against each of the first and second spring bearing surfaces 44 and 46 and the first spring bearing surface 44 may be operably coupled to the bolt 36. More specifically, the first spring bearing surface 44 may abut against the head 38 of the bolt 36. Finally, the threaded portion 42 of the bolt 36 may be received within the through passage 32 of the bushing 30 and may be sized to be threaded into and past the threaded portion 60 of the bushing 30 such that the components of the spring assembly 10 may all be retained together. In the illustrated example, the second spring bearing surface 46 may be slidably coupled to the bushing 30 for sliding movement between the first spring bearing surface 44 and the stop 34. In this manner, all six components: bolt 36, first spring bearing surface 44, second spring bearing surface 46, bushing 30, spring 56, and spring 58 may be held as a single assembled spring assembly 10 until it is installed on the fan case 12. The spring assembly 10 may be held together with a combination of four key features: the bolt head 38, threaded portion 42 of the bolt 36, internal threads 60 in the bushing 30, and the stop 34 on the bushing 30 at this point the spring assembly 10 may be considered to be in a non-use condition.

At installation, the bolt 36 may be engaged in a nut 64 or nutplate before spring force is transferred to the fan case 12. When the spring assembly 10 is installed, the first spring 56 and second spring 58 may be fully loaded and the spring assembly 10 may be considered to be in a use condition. Standard torque may be used to install the spring assembly 10 in the fan case 12.

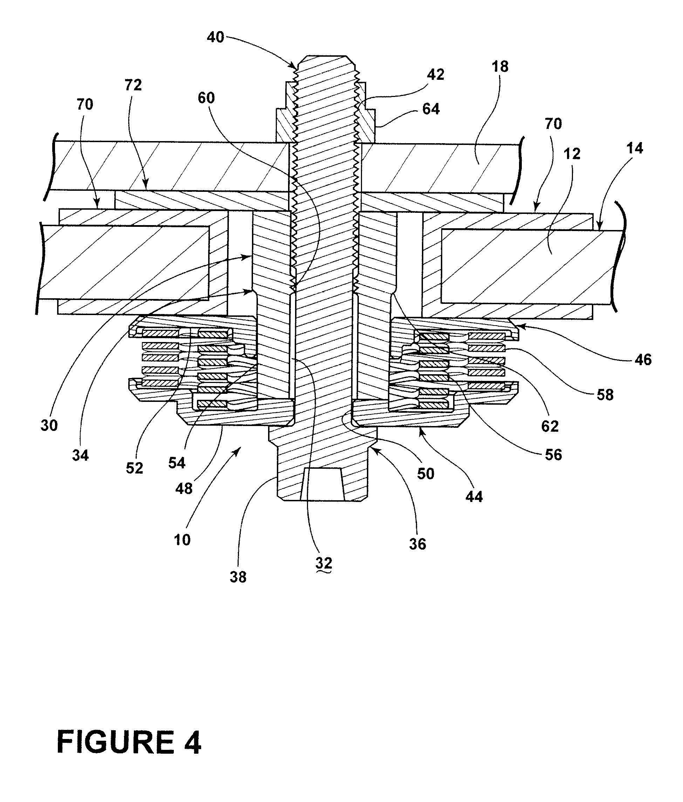

Figure 4 illustrates that the spring assembly 10 may be installed within a wear surface 70, which wraps around an edge of the fan case 12 in which an opening is formed, such that the spring assembly 10 may move laterally within the wear surface 70 when the heat exchanger 16 thermally expands. A wear pad 72 may be included between the bracket 18 and the wear surface 70 such that when the spring assembly 10 is installed the bolt 36 passes through a portion of the wear pad 72. The wear surface 70 and wear pad 72 may be made of any suitable materials including that the wear surface 70 may be formed from polyether ether ketone (PEEK) and the wear pad 72 may be formed from stainless steel. The wear surface 70 and wear pad 72 may be shaped in any suitable manner including that the wear pad 72 may be incorporated with the bracket 18 or wear surface 70 could be incorporated with fan case 12. Wear surface 70 may be formed from multiple parts.

In the use condition of the assembled spring assembly 10 a portion of the threaded portion 42 of the bolt 36 extends out the through passage 32 where the threaded portion 42 of the bolt 36 may be threaded into a separate element such as the bracket 18. Alternatively, the bolt 36 may pass through an opening in the bracket 18 and be threaded into a nut 64 located on an opposite side of the bracket 18. It is contemplated that the nut 64 may be welded or riveted to the bracket 18 for ease of assembly. In this manner, the bolt 36 may be threaded into the nut 64 to accomplish the securing of the bolt 36, first spring bearing surface 44, and bushing 30 onto the bracket 18. Threading of the threaded portion 42 of the bolt 36 into the bracket 18 or nut 64 continues to compress the springs 56 and 58 until the bushing 30 interfaces with wear pad 72 and provides for control of a spring force applied by the second biasing element 46 onto the fan case 12.

During operation of the jet engine 14, the relative thermal delta between heat exchanger 16 and fan case 12 causes thermally-induced movement between the fan case 12 and heat exchanger 16. This movement may result in a relative circumferential movement between the fan case 12 and heat exchanger 16. The spring assembly 10 holds each bracket 18 to the fan case 12 with a clamping force that is overcome by thermally induced forces within the heat exchanger 16, which allows the heat exchanger 16 to slide on the fan case 12. The spring assembly 10 moves in combination with the heat exchanger 16. The spring assembly 10 moves within the wear surface 70 with the intent being that during circumferential movement of the heat exchanger 16 and the spring assembly 10 the moving portions rub on the wear surface 70 and the wear pad 72, which may be easily replaced, instead of the fan case 12.

The above described embodiments provide for a variety of benefits including that a self-contained spring assembly may be used and installed with standard tools, torques, and assembly techniques. Such spring assemblies may allow for heat exchangers to be easily and quickly replaced while providing the required functionality, manufacturability, maintainability, low weight, and low cost.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A spring assembly comprising:
a bushing defining a through passage, a first threaded portion provided within the through passage, and further having a stop;
a bolt having a head and a shank on which is provided a second threaded portion received within the through passage and sized to be threaded into the first threaded portion;
a first spring bearing surface operably coupled to at least one of the bushing and bolt;
a second spring bearing surface slidably coupled to the bushing for sliding movement between the first spring bearing surface and the stop; and
a spring located between and bearing against each of the first and second spring bearing surfaces;
wherein in a non-use condition, the second threaded portion is threaded into the first threaded portion to retain the bushing, bolt, first and second bearing surfaces, and spring as an assembled unit, and in a use condition, the second threaded portion extends out the through passage where the second threaded portion may be threaded into a separate element.

2. The spring assembly of claim 1, wherein the second threaded portion is threaded beyond the first threaded portion in any condition.

3. The spring assembly of any preceding claim, wherein in the non-use condition, the spring biases the second spring bearing surface against the stop and the first and second threaded portions against each other.

4. The spring assembly of any preceding claim, wherein in the use condition, the second spring bearing surface is slid toward the first spring bearing surface to further compress the spring.

5. The spring assembly of any preceding claim, wherein the spring force in the use condition is determined by spring design and bushing height.

6. The spring assembly of any preceding claim, wherein the first spring bearing surface comprises a first plate located between the bolt head and the bushing and having an opening through which the bolt shank passes.

7. The spring assembly of any preceding claim, wherein the second bearing surface comprises a second plate having a second opening through which the bushing passes.

8. The spring assembly of any preceding claim, wherein the stop is on an exterior of the bushing and interferes with the sliding movement of the second plate relative to the bushing to limit the sliding movement of the second plate.

9. The spring assembly of any preceding claim, wherein the stop comprising an increase in a cross section of the bushing.

10. The spring assembly of any preceding claim, wherein the stop comprises a shoulder on the bushing.

11. The spring assembly of any preceding claim, wherein the spring comprises multiple springs.

12. The spring assembly of any preceding claim, wherein the first spring bearing surface is separate from at least one of the bushing and bolt.

13. The spring assembly of any preceding claim, wherein the first spring bearing surface is separate of both the bushing and bolt.
